# EUROPÄISCHE PATENTSCHRIFT

(11) **EP 1 839 481 B1**
(45) Veröffentlichungstag und Bekanntmachung des Hinweises auf die Patenterteilung: **07.04.2010**
(21) Anmeldenummer: 06026661.6
(22) Anmeldetag: 22.12.2006
(51) Int. Cl.: A01G 9/02, G09F 3/20

(54) **Behälter aus Kunststoff mit Etikettenschlitz**
Plastic container with slot for a tag
Récipient en matière de plastique avec fente pour étiquette

(30) Priorität: 28.03.2006 DE 202006004925 U
(43) Veröffentlichungstag der Anmeldung: 03.10.2007
(73) Patentinhaber: Pöppelmann Holding GmbH & Co. KG., 49393 Lohne (DE)
(72) Erfinder: Sieverding, Alfons, 49393 Lohne (DE)
(74) Vertreter: Bünemann, Egon

(56) Entgegenhaltungen:
- WO-A-93/19446
- DE-U1- 29 601 674
- NL-C1- 1 011 013

## Beschreibung

Die Erfindung betrifft einen Behälter aus Kunststoff, insbesondere einen tiefgezogenen Pflanztopf, nach dem Oberbegriff des Anspruchs 1.

Behälter mit Schlitzen für einsteckbare Etiketten sind im Erwerbsgartenbau etwa in Form von Pflanztöpfen, Paletten, Steigen und dgl. bekannt. Dabei werden Schlitze zum Einstecken von Etiketten aus einem flachen Material wie Karton, Kunststoff, Metall- oder Verbundfolie in einen Schlitz am Rand des Behälters eingesteckt, um Informationen zum Produkt, zum Preis u. dgl. mit dem Etikett wiederzugeben.

Sowohl die Behälter wie auch die Etiketten sind dabei, ggf. auch in Abstimmung miteinander, auf praktische Erfordernisse hinsichtlich eines einfachen und schnellen Anbringens zu gestalten, so daß die Etiketten möglichst mit einer einfachen und schnellen Einsteckbewegung am Behälter zu fixieren sind. Sie sollen dann auch einen festen und verläßlichen Sitz erhalten, der regelmäßig nicht nur ein versehentliches Herausfallen, sondern auch eine unerwünschte Manipulation im Sinne einer Etikettenvertauschung bei Verkaufswaren bestmöglich ausschließt. Dazu werden schon bei herkömmlichen Behältern Rastmittel im Einsteckbereich vorgesehen, die mit Widerhaken-Kanten oder Verzahnungskanten am Etikett zusammenwirken.

Aus der WO 93/19446 A sind Behälter zu sehen, die für Etiketten mit einem quer gerichteten Verrastungsschlitz geeignete Einstecköffnungen aufweisen. Diese Einstecköffnungen sind mit einer flachen Zunge oder Rastnase versehen, die im Zuge des Einsteckens des Etiketts in dessen Querschlitz arretierend einrastet. Zur Erleichterung des Rastvorgangs ist die Öffnung weit ausgebildet, so daß auch ein Etikett mit gekrümmt oder abgewinkelt vorgeformtem Querschnitt einzuschieben ist. Eine solche Gestaltung ist allerdings herstellungstechnisch aufwendig und wenig geeignet, daß Etikett gegen ein oberseitiges Umkippen zum Topfinneren hin zu halten.

Eine bessere Führung und Stabilisierung des Etiketts in seiner Einstellage ist aus der NL 1 011 013 zu ersehen, bei der ein schachtförmiger Etiketthalter in einem Randbereich des Behälters ausgebildet ist, wobei der Etiketthalter auf der einen Seite durch einen verdickten und erhöhten Randbereich des Behälters und auf der Gegenseite durch ein U-förmiges, nach unten offenes Randprofil begrenzt ist. Eine solche Gestaltung ist überaus aufwendig und jedenfalls mit einer Tiefziehtechnik für derartige Behälter nicht realisierbar.

Die DE 296 01 674 U1 zeigt einen Behälter mit einem trichterartigen Einsteckbereich für Etiketten, in dem die Etiketten in einem engen, mit "Presslippen" gebildeten Schlitz fixiert und gehalten werden. Auch eine solche Ausführungsform ist herstellungstechnisch aufwendig und heikel zumal sie für einen hinreichenden Halt des Etiketts eine ausreichend tiefe Gestaltung des Einsteckbereichs voraussetzt. Darüber hinaus ist das Einstecken in eine solche klemmende Halterung schwierig.

Besondere Schwierigkeiten bei der Gestaltung von Etikettenschlitzen ergeben sich mit fortschreitenden Entwicklungen zu immer dünnerwandigen Behältern und verschmälerten Behälterrändern, die sehr wenig Platz für die Etikettenschlitze bieten und in einer elementaren Schlitzform auch dem Etikett wenig Halt gegen ein Umkippen oder Umklappen nach innen geben können.

Die so entstandenen Probleme werden gemäß der Erfindung von einem Behälter nach dem Oberbegriff des Anspruchs 1 ausgehend mit dessen kennzeichnenden Merkmalen gelöst. Die räumliche Ausgestaltung eines solchen Schlitzes aus der einfachen, ebenen Fläche des Behälterrandes heraus läßt sich auch bei einem dünnwandigen Material und einem schmalen Behälterrand herstellen und bietet die Möglichkeit, mit den gegeneinander höhenversetzten Schlitzkanten eine Ausrichtung des Etiketts zu erzwingen, die unterseitig mit dem Einsteckfortsatz zur Behälterwand gerichtet ist und damit einem Abklappen des Etiketts nach innen entgegenwirkt, wobei der Einsteckfortsatz von der Wand hin abschwenkt. In umgekehrter Richtung bietet die Behälterwand eine Anlagefläche für den Einsteckfortsatz, der das Etikett gegen ein Abkippen nach außen absichert. Eine unerwünschte Scharnierwirkung insbesondere dünnwandiger Behälter, die im Bereich des Behälterrandes gegeben ist, läßt sich mit dieser Gestaltung ausschließen.

Die räumliche Gestaltung des Schlitzes mit gegeneinander höhenversetzten Schlitzkanten läßt sich auch systemgerecht mit dem Tiefziehvorgang für tiefgezogene Behälter, insbesondere auch tiefgezogene Pflanztöpfe, verbinden, bei dem Stanzbewegungen schon üblicherweise zum Schluß des Tiefziehens für ein Heraustrennen des Behälters aus der Ausgangsfolie vorzusehen sind.

Der Schlitz kann dabei gerade oder beispielsweise in Anpassung an einen bogenförmigen Verlauf des Behälterrandes gekrümmt sein. In beiden Fällen kann über die gesamte Länge des Schlitzes ein Höhenversatz zwischen den Schlitzkanten vorgesehen sein, wobei vorzugsweise die außenliegende Kante nicht nur gegenüber der innenliegenden Kante, sondern auch gegenüber der Oberfläche des Behälterrandes nach unten abgesenkt ist und an einem quergerichteten Endteil des Schlitzes übergangslos endet.

Die so nach Art einer Fahne oder eines Federlappens umgrenzte Schlitzkante kann gegenüber einem Einstecketikett eine federnde Raste bilden, die rückwärtige Kanten des Einstecketiketts eng hintergreift. Sie kann aber auch aufgrund einer in Richtung auf den Schlitz bzw. ein Etikett hin abfallenden Schräge eine Widerhakenfläche bilden, die von einer Sperrfahne des Etiketts verhakend hintergriffen wird.

Der Behälterrand kann in einer auch sonst üblichen Weise außenseitig nach unten geformt sein, womit eine Versteifung erzielt wird und unangenehme scharfe Randkanten bei der Handhabung vermieden sind. Im Zusammenspiel mit einem Schlitz der hier vorgesehenen Art verdeckt er aber auch die Unterseite des Schlitzes und ggf. die damit zusammenwirkenden Bereiche eines Etiketts und erschwert damit unerwünschte Manipulationen.

In Abstimmung auf einen solchen Behälterschlitz kann ein Etikett im Bereich seines Einsteckfortsatzes mit zumindest einer gegen die Einsteckrichtung weisenden Sperrfahne versehen sein. Eine solche Sperrfahne ist, im Bereich des Einsteckfortsatzes innenliegend und damit robust ausführbar und ermöglicht es auch, den Einsteckfortsatz, der üblicherweise zum Ende hin verjüngt oder spitz zuläuft, mit glatten Kanten zu versehen, was ein verhakungsfreies und schnelles Einstecken erlaubt. Eine innenliegende Sperrfahne kann eine nach außen wölbende Prägung erhalten, um diese zu versteifen und um am Ende des Einsteckens ein Verhaken sicherzustellen.

Ein Ausführungsbeispiel der Erfindung ist in der Zeichnung dargestellt und wird nachfolgend näher beschrieben. In der Zeichnung zeigen:
- Fig. 1 u. 2: Ansicht eines Pflanztopfs schräg von oben bzw. von oben
- Fig. 3 u. 4: Pflanztopf gemäß Fig. 1 und 2 mit eingesteckten Etiketten in Ansicht schräg von oben bzw. schräg von unten
- Fig. 5 u. 6: schnittbildliche Teilansicht des Randbereichs des Pflanztopfs ohne Etikett bzw. mit eingestecktem Etikett
- Fig. 7 u. 8: Detailansichten von unten in Richtung der Pfeile VII in Fig. 5 bzw. VIII in Fig. 6

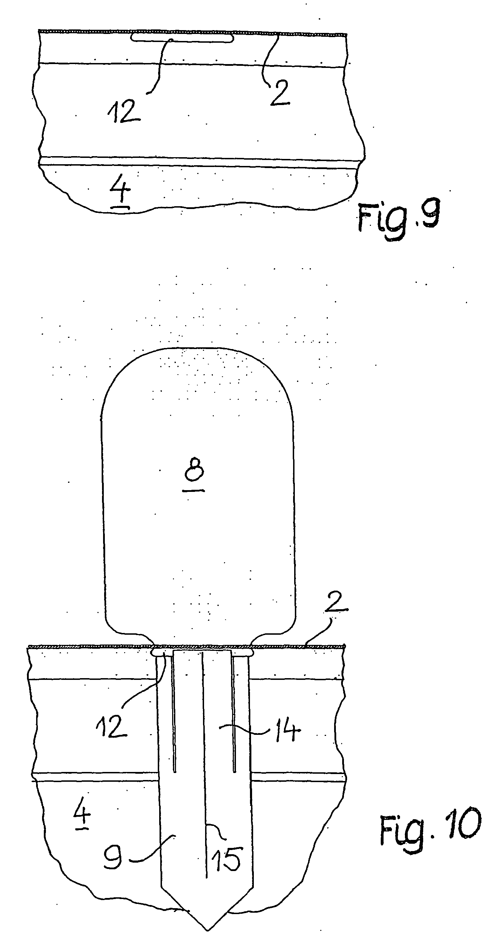

- Fig. 9 u. 10: Schnitt nach Linie IX-IX in Fig. 5 bzw. X-X in. Fig. 6.

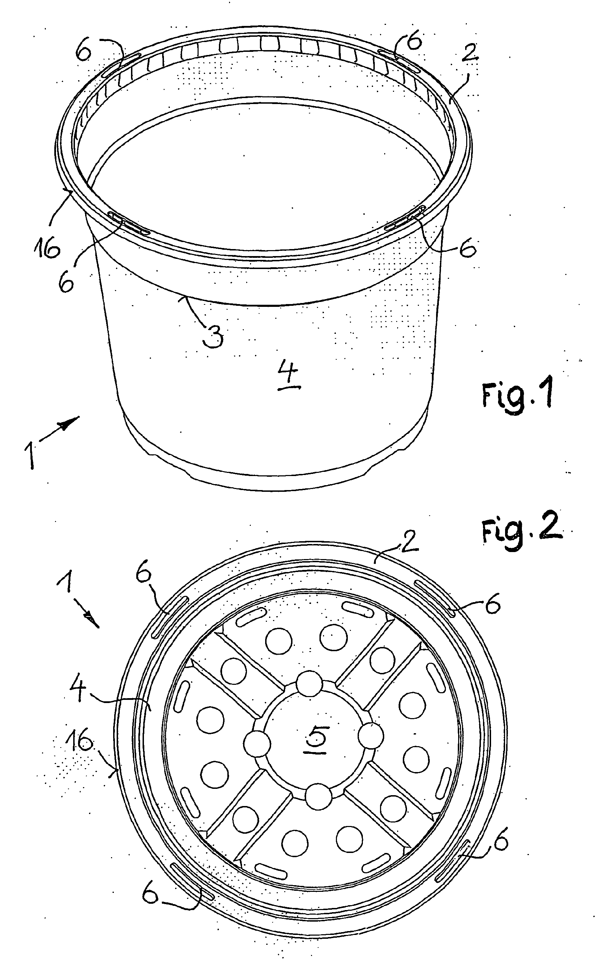

In Fig. 1 und 2 ist ein Pflanztopf 1 in einer tiefgezogenen, dünnwandigen Ausführung als runder Topf mit schmalem, ringförmigem, ebenem Behälterrand 2 und einer in einem Absatz 3 gestuften Behälterwand 4 in üblicher Grundform eines Kegelstumpfmantels dargestellt, die unterseitig in einen profilierten und mit Löcher versehenen Topfboden 5 übergeht. Der Behälterrand 2 ist mit vier übereinstimmenden, gleichmäßig jeweils mit einem Umfangswinkel von 90° gegeneinander versetzten und in Anpassung an den Verlauf des Behälterrands leicht gekrümmten Schlitzen 6 versehen, die dem Einstecken von Etiketten dienen.

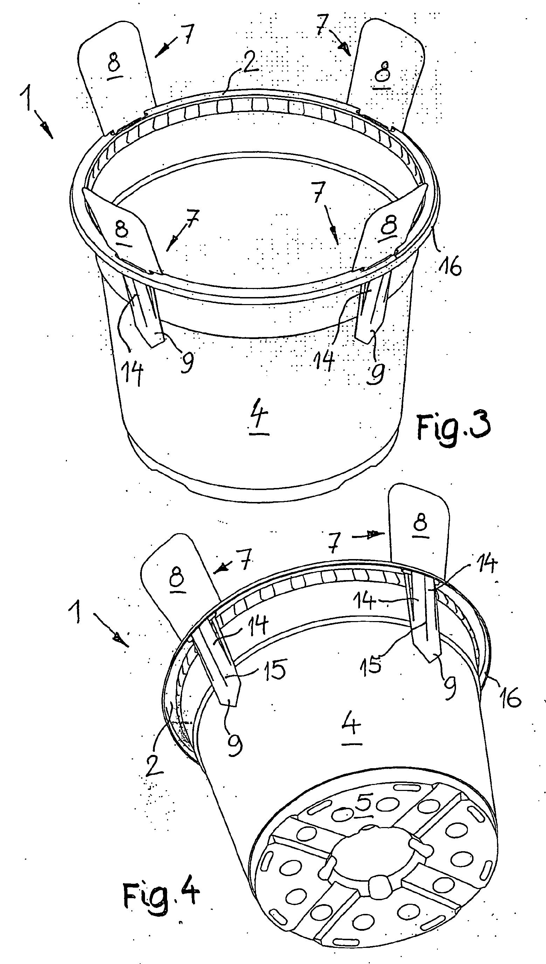

In Fig. 3 und Fig. 4 ist der Pflanztopf 1 in allen vier Schlitzen 6 mit übereinstimmenden Etiketten 7 bestückt, die oberseitig eine Etikettentafel 8 für Darstellungen, Beschriftungen und sonstige Informationen und unterseitig einen Einsteckfortsatz 9 zur Verankerung am Topf 1 aufweisen. Es versteht sich, daß je nach den Ansprüchen der Praxis auch unterschiedliche Etiketten die Schlitze eingesteckt werden können, wie auch ggf. eine geringere Zahl von Etiketten 7 vorzusehen ist.

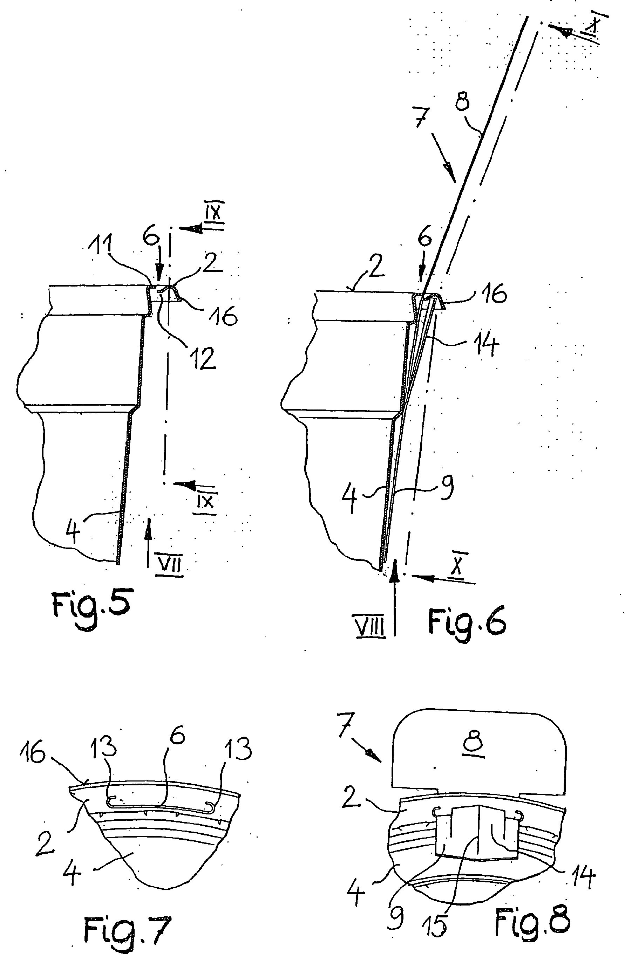

Wie insbesondere aus der Schnittdarstellung gemäß Fig. 5 erkennbar wird, ist ein Schlitz 6 nicht insgesamt innerhalb der Ebene des Behälterrandes 2 liegend, sondern räumlich ausgeformt, so daß nur eine nach innen zur Behälterwand 4 hin liegende Schlitzkante 11 innerhalb der Ebene des Behälterrandes 6 verblieben ist, eine außenliegende Schlitzkante 12 dagegen schräg nach unten hin abgesenkt ist. Dies erlaubt es, einen Schlitz einzustanzen, bei dem in der Draufsicht keine offene Schlitzbreite vorgegeben werden muß. Für den Durchtritt eines Etiketts 7 mit dessen Einsteckfortsatz 9 ergibt sich eine Öffnungsbreite schon mit der Absenkung der Schlitzkante 12, die unter Einrechnung einer Federwirkung der Schlitzkante 12 im Sinne eines festen Sitzes knapp bemessen werden kann. Gleichzeitig ergibt sich für den Schlitz 6 eine Ausrichtung der Schlitzöffnung, die, von oben nach unten, also in Einsteckrichtung eines Einsteckfortsatzes, gesehen, zur Behälterwand 4 hin gerichtet ist.

Aus Fig. 6 ist das Zusammenspiel des Schlitzes 6 mit dem eingesteckten Etikett 7 bzw. mit dessen Einsteckfortsatz 9 im Längsschnitt zu erkennen. Das Etikett erhält eine vorwiegend senkrechte, leicht nach außen weisende Ausrichtung, während der durch den Schlitz 6 nach unten hindurchgeführte Einsteckfortsatz leicht abgebogen ist und das Etikett 7 in seiner Stellung unter einer Vorspannung festlegt.

Wie insbesondere aus Fig. 7 deutlich wird, ist der Schlitz 6 an beiden Enden mit einem quergerichteten Endteil 13, in Form eines Halbkreises auslaufend, versehen, der eine durchgehende Stanzlinie bis zum Ende hin und auch insbesondere eine flächige Form der tiefergelegten Schlitzkante 12 bis zum Ende des Schlitzes 6 ohne einen weichen Auslauf zum Ende hin schafft. Dies ermöglicht eine saubere Schlitzausbildung bei der Topffertigung, insbesondere beim Tiefziehen, und gewährleistet, daß die angestrebte Geometrie des Schlitzes bis zu seinen Enden hin beibehalten werden kann.

Wie insbesondere aus Fig. 3, 4, 6 und 8 ersichtlich ist, ist das Etikett 7 im Bereich seines Einsteckfortsatzes 9 mit einer innenliegenden Sperrfahne 14 ausgestattet. Die Außenkanten des jeweiligen Einsteckfortsatzes 9 sind von einem zugespitzten Endbereich bis zur Etikettentafel 8 hin gerade oder jedenfalls glatt ausführbar, was das Einstecken erleichtert.

Die Sperrfahne 14 hintergreift nach dem Einstecken die tieferliegende Schlitzkante 12, so daß das Etikett nicht ohne weiteres zurückzuziehen ist. Vielmehr wird die Sperrfahne 14 nach einer Rückbewegung, wie in Fig. 6 dargestellt, von der unterseitigen Schräge der tieferliegenden Schlitzkante 12 nach außen hin abgelenkt. Die Verhakungswirkung der Sperrfahne 14 wird durch eine in Einsteckrichtung verlaufende mittige Prägung 15 unterstützt, die die Sperrfahne 14 versteift und auch nach außen auffaltet oder aufwölbt.

Wie aus Fig. 5 und 6 ersichtlich ist, endet der im wesentlichen horizontale, planebene Behälterrand 2 mit einer Randkante 16 nach unten abgebogen, was üblicherweise der Versteifung und der kantenfreien Handhabung dient. Hier nimmt der Behälterrand mit seiner abgebogenen Randkante 16 auch einen endseitigen Teil der Sperrfahne 14 auf, um diese damit zu blockieren und auch im Hinblick auf etwaige Manipulationsabsichten unzugänglich zu machen.

Mit den vorstehend beschriebenen Gestaltungen eines Behälters und eines Etiketts dazu ist es möglich geworden, auch bei material- und raumsparend ausgebildeten Behältern mit geringen Wandstärken und schmalen Behälterrändern eine Etikettaufnahme mit einem stabilen und manipulationsgeschützten Sitz für das Etikett zu schaffen, wobei das Etikett in einer besonders unproblematischen Einsteckbewegung am Behälter anzubringen ist.

## Patentansprüche

1. Behälter (1) aus Kunststoff, insbesondere tiefgezogener Pflanztopf, mit einem vorwiegend waagerecht ausgerichteten oberseitigen Behälterrand (2), an den sich zumindest eine vorwiegend nach unten ausgerichtete Behälterwand (4) anschließt, wobei der Behälterrand (2) zumindest einen dem Behälterrand angepaßten Schlitz (6) für ein mit einem Einsteckfortsatz (9) versehenes Etikett (7) aufweist, **dadurch gekennzeichnet, daß** der Schlitz (6) mit zwei gegeneinander höhenversetzten Schlitzkanten (11,12) ausgebildet ist, wobei die der Behälterwand (4) abgelegene Schlitzkante (12) tiefer liegt als die der Behälterwand (4) benachbarte Schlitzkante (11), welche innerhalb des Ebene des Behälterrandes verbleibt.

2. Behälter nach Anspruch 1, **dadurch gekennzeichnet, daß** der Schlitz (6) zumindest einenends mit einem quergerichteten Endteil (13) versehen ist.

3. Behälter nach Anspruch 2, **dadurch gekennzeichnet, daß** der Endteil (13) des Schlitzes (6) von der Behälterwand (4) fortgerichtet ist.

4. Behälter nach Anspruch 2 oder 3, **dadurch gekennzeichnet, daß** der Endteil (13) bogenförmig ausgebildet ist.

5. Behälter nach einem der Ansprüche 1 bis 4, **dadurch gekennzeichnet, daß** der Schlitz gekrümmt ist.

6. Behälter nach einem der Ansprüche 1 bis 5, **dadurch gekennzeichnet, daß** der Behälterrand (2) zum Schlitz (6) hin nach unten abfallend geformt ist.

7. Behälter nach einem der Ansprüche 1 bis 6, **gekennzeichnet durch** ein in den Schlitz (6) bzw. in einen von mehreren Schlitzen (6) mit einem Einsteckfortsatz (9) eingestecktes Etikett (7), dessen Einsteckfortsatz (9) sich an der Behälterwand (4) abstützt.

8. Behälter nach Anspruch 7, **dadurch gekennzeichnet, daß** das Etikett (7) an seinem Einsteckfortsatz (9) zumindest eine gegen die Einsteckrichtung weisende Sperrfahne (14) aufweist.

9. Behälter nach Anspruch 8, **dadurch gekennzeichnet, daß** die Sperrfahne (14) einstückig mit einem aus flachem Ausgangsmaterial hergestellten Etikett (7) mit einer gestanzten oder geschnittenen Kontur gebildet ist.

10. Behälter nach Anspruch 8 oder 9, **dadurch gekennzeichnet, daß** das Etikett (7) zumindest im Bereich der Sperrfahne (14) eine in Einsteckrichtung verlaufende und die Sperrfahne nach außen wölbende Prägung (15) aufweist.

11. Behälter nach einem der Ansprüche 8 bis 10 in Verbindung mit Anspruch 6, **dadurch gekennzeichnet, daß** die Sperrfahne (14) bei in einen Schlitz (6) eingestecktem Etikett (7) endseitig durch die nach unten geformte Randkante (16) des Behälterrands (2) verdeckt ist.

## Claims

1. Container (1) of plastics material, and in particular a deep-drawn plant pot, having a predominantly horizontally aligned rim (2) at the top which connects up with at least one predominantly downwardly aligned wall (4), the rim (2) of the container having at least one slot (6), which is matched to the rim of the container, for a tag (7) which is provided with an extension (9) for insertion, **characterised in that** the slot (6) is formed to have two edges (11, 12) which are offset from one another vertically, that edge (12) of the slot which is remote from the wall (4) of the container being situated at a lower level than that edge (11) of the slot which is adjacent the wall (4) of the container, which latter edge (11) remains within the plane of the rim of the container.

2. Container according to claim 1, **characterised in that** the slot (6) is provided with a transversely directed end-portion (13) at at least one end.

3. Container according to claim 2, **characterised in that** the end-potion (13) of the slot (6) is directed away from the wall (4) of the container.

4. Container according to claim 2 or 3, **characterised in that** the end-portion (13) is of an arcuate form.

5. Container according to one of claims 1 to 4, **characterised in that** the slot is curved.

6. Container according to one of claims 1 to 5, **characterised in that** the rim (2) of the container is formed to slope downwards to the slot (6).

7. Container according to one of claims 1 to 6, **characterised by** a tag (7) which is inserted in the slot (6), or in one of a plurality of slots (6), by an extension for insertion (9), the extension for insertion (9) of which tag (7) is supported against the wall (4) of the container.

8. Container according to claim 7, **characterised in that** the tag (7) has on or in its extension for insertion (9) at least one locking vane (14) which points in the opposite direction to the direction of insertion.

9. Container according to claim 8, **characterised in that** the locking vane (14) is formed in one piece with a tag (7) which is produced from flat starting material and which has a stamped, punched or cut outline.

10. Container according to claim 8 or 9, **characterised in that** the tag (7) has, at least in the region of the locking vane (14), an indentation (15) extending in the direction of insertion which arches the locking vane outwards.

11. Container according to one of claims 8 to 10 in conjunction with claim 6, **characterised in that**, when a tag (7) is inserted in a slot (6), the end of the locking vane (14) is hidden by the downwardly formed edge (16) of the rim (2) of the container.

## Revendications

1. Récipient (1) en matière plastique, notamment pot embouti pour plante, comprenant un bord de récipient (2) sur la face supérieure orienté généralement horizontalement et auquel se raccorde au moins une paroi de récipient (4) généralement orientée vers le bas, le bord de récipient (2) comprenant au moins une fente (6) adaptée au bord du récipient pour une étiquette (7) pourvue d'un prolongement d'introduction (9), **caractérisé en ce que** la fente (6) est conçue avec deux arêtes de fente (11, 12) décalées en hauteur l'une par rapport à l'autre, l'arête de fente (12) éloignée de la paroi due récipient (4) étant plus profonde que l'arête de fente (11) voisine de la paroi de récipient (4) et restant à l'intérieur du plan du bord du récipient.

2. Récipient selon la revendication 1, **caractérisé en ce que** la fente (6) est pourvue au moins à une extrémité d'une partie d'extrémité (13) orientée transversalement.

3. Récipient selon la revendication 2, **caractérisé en ce que** la partie d'extrémité (13) de la fente (6) est orientée vers l'avant par la paroi de récipient (4).

4. Récipient selon la revendication 2 ou 3, **caractérisé en ce que** la partie d'extrémité (13) est conçue en forme d'arc.

5. Récipient selon l'une quelconque des revendications 1 à 4, **caractérisé en ce que** la fente est incurvée.

6. Récipient selon l'une quelconque des revendications 1 à 5, **caractérisé en ce que** le bord de récipient (2) est formé de manière à s'incliner vers le bas en direction de la fente (6).

7. Récipient selon l'une quelconque des revendications 1 à 6, **caractérisé par** une étiquette (7) introduite dans la fente (6) ou dans une parmi plusieurs fentes (6) dotées d'un prolongement d'introduction (9) et dont le prolongement d'introduction (9) s'appuie contre la paroi de récipient (4).

8. Récipient selon la revendication 7, **caractérisé en ce que** l'étiquette (7) comprend sur son prolongement d'introduction (9) au moins un drapeau de blocage (14) orienté dans le sens inverse de la direction d'introduction.

9. Récipient selon la revendication 8, **caractérisé en ce que** le drapeau de blocage (14) est formé d'une seule pièce avec une étiquette (7) fabriquée à partir d'un matériau de départ plat et présentant un contour perforé ou découpé.

10. Récipient selon la revendication 8 ou 9, **caractérisé en ce que** l'étiquette (7) comprend au moins dans la zone du drapeau de blocage (14) un gaufrage (15) s'étendant dans la direction d'introduction et courbant le drapeau de blocage vers l'extérieur.

11. Récipient selon l'une quelconque des revendications 8 à 10 en liaison avec la revendication 6, **caractérisé en ce que** le drapeau de blocage (14) est recouvert par l'arête de bord (16) formée vers le bas du bord de récipient (2) lorsque l'étiquette (7) est introduite dans une fente (6).
